# DEMANDE DE BREVET EUROPEEN

(11) **EP 1 108 643 A1**
(43) Date de publication de la demande: **20.06.2001**
(21) Numéro de dépôt: 00403485.6
(22) Date de dépôt: 12.12.2000
(51) Int. Cl.: B62M 13/04, B62M 23/02

(54) **Dispositif pour la motorisation d'une bicyclette**

(30) Priorité: 13.12.1999 FR 9915651
(71) Demandeur: Systela, 75008 Paris (FR)
(72) Inventeur: Harle, Eric, 78350 Jouy-en-Josas (FR)
(74) Mandataire: Busnel, Jean-Benoît

(57) **Abrégé**

L'invention concerne un dispositif pour la motorisation d'une bicyclette du type comprenant un ensemble propulseur constitué d'un moteur électrique (1) alimenté par une batterie (2), des moyens de fixation dudit ensemble (1,2) au cadre (C) de la bicyclette et des moyens de transmission agissant entre l'arbre (M) du moteur et la roue arrière (R),
caractérisé en ce que lesdits moyens de transmission comprennent un galet cylindrique (3) raccordé à l'arbre (M) du moteur et pourvu d'une zone périphérique d'entraînement par friction tandis que lesdits moyens de fixation comprennent un pivot cylindrique (4) monté sous le cadre (C) parallèlement à l'axe du pédalier (P) et destiné à coopérer de manière amovible en libre rotation avec un manchon (5) porté par un bras de suspension (6) solidaire dudit ensemble propulseur (1,2), de façon à ce que ladite zone d'entraînement du galet soit susceptible de venir en appui rotatif contre la roue arrière (R).

## Description

La présente invention concerne un dispositif pour la motorisation d'une bicyclette.

Plus précisément, l'invention concerne un dispositif permettant de produire une assistance au pédalage.

Il existe déjà des dispositifs de ce type, qui sont destinés à équiper des bicyclettes et qui comprennent un bloc moteur constitué d'un moteur électrique, alimenté par une batterie, des moyens de fixation dudit bloc au cadre et des moyens de transmission agissant de façon temporaire entre l'arbre du moteur et la zone arrière du cycle.

En effet, une personne adulte en bonne santé est capable de fournir pendant plusieurs heures une puissance de pédalage de quelques dizaines de watts qui est suffisante pour assurer le déplacement d'une bicyclette sur terrain plat à 15-20 km/h. Dès que survient une côte ou un vent contraire, des efforts supplémentaires doivent être fournis pour conserver au moins une vitesse constante.

Dans ces moments, un appoint de puissance permet d'épargner au cycliste une fatigue physique trop importante. L'ordre de grandeur de cet appoint est évalué à approximativement 100W restitué.

Or, dans 5 à 10 kg de batteries conventionnelles, il est possible de stocker une énergie d'appoint suffisante pour effectuer 20 km en pédalage assisté, soit 100 à 200 VAh.

De nombreux constructeurs ont donc développé des projets de vélos électriques utilisant le principe d'assistance au pédalage. Ces engins se différencient du vélomoteur électrique ne nécessitant pas de pédalage par la masse de batterie embarquée, toujours inférieure à 10 kg, la puissance du moteur toujours inférieure à 500W, l'asservissement de la motorisation à l'action de pédalage et la limitation de la vitesse de l'assistance qui ne dépasse pas normalement 25 km/h.

Sur tous ces systèmes, le choix de l'emplacement du moteur et du type de transmission a nécessité un remodelage du cycle. Ainsi, le plus souvent le cadre a-t-il été complètement dessiné autour du moteur.

Le cas échéant, le pédalier a été remplacé pour insérer le système d'assistance.

Encore, dans une autre variante, le garde-boue avant a été supprimé.

Dans tous les cas, la pose du dispositif est une opération lourde à exécuter en atelier, et souvent irréversible.

Par ailleurs, les systèmes existants n'offrent pas d'emplacement ergonomique et esthétique pour la batterie.

En outre, la fixation du bloc moteur doit reprendre un moment de forces important et dans la plupart des cas, les moteurs électriques traditionnels disponibles sur le marché doivent être modifiés pour s'adapter à une telle application.

L'invention a pour objectif de résoudre les problèmes techniques posés par l'art antérieur, tout en veillant à ne pas élever le centre de gravité et en assurant une présentation des moyens de motorisation en un ensemble unique prêt au montage et susceptible d'être monté de façon réversible sur la plupart des vélos existants.

Ce but est atteint, selon l'invention au moyen d'un dispositif pour la motorisation d'une bicyclette du type comprenant un ensemble propulseur constitué d'un moteur électrique alimenté par une batterie, des moyens de fixation dudit ensemble au cadre de la bicyclette et des moyens de transmission agissant entre l'arbre du moteur et la roue arrière,
caractérisé en ce que lesdits moyens de transmission comprennent un galet cylindrique raccordé à l'arbre dudit moteur et pourvu d'une zone périphérique d'entraînement par friction, tandis que lesdits moyens de fixation comprennent un pivot cylindrique monté sous le cadre parallèlement à l'axe du pédalier et destiné à coopérer de manière amovible en libre rotation avec un manchon porté par un bras de suspension solidaire dudit ensemble propulseur, de façon à ce que ladite zone d'entraînement du galet soit susceptible de venir en appui rotatif contre la roue arrière.

Selon une caractéristique avantageuse, lesdits moyens de fixation comprennent, en outre, un organe de rappel élastique d'au moins d'une partie dudit ensemble propulseur en position haute de débrayage.

Selon une variante, ledit organe de rappel est constitué d'un collier en serrage sur le cadre et se prolongeant vers le bas par une tige reliée à la batterie via un ressort hélicoïdal et/ou un vérin.

Selon une autre caractéristique avantageuse, le moteur est logé au moins partiellement à l'intérieur dudit galet formant carter.

De préférence, ledit galet est constitué d'un cylindre évidé pourvu de deux flasques latéraux.

Selon encore une caractéristique, ledit bras de suspension est porté par le moteur perpendiculairement à son arbre.

Selon un mode de réalisation spécifique, ledit galet est raccordé à l'arbre moteur au moyen d'engrenages internes.

Selon une autre variante, lesdits engrenages sont en prise, d'une part, avec une roue dentée centrale portée par l'arbre moteur et, d'autre part, avec une zone circonférentielle crénelée ménagée sur la paroi latérale interne dudit galet.

De préférence, lesdits engrenages sont constitués d'un jeu d'au moins deux roues dentées identiques et/ou coplanaires dont les axes sont parallèles à l'axe du galet.

Selon encore une autre variante, au moins l'un desdits engrenages est jumelé avec une roue montée sur le même axe et symétriquement par rapport au moteur.

Selon d'autres caractéristiques, ledit pivot comporte un organe de blocage en translation dudit manchon.

En vue d'optimiser le fonctionnement du dispositif de l'invention, il est également prévu que l'axe longitudinal de la batterie est incliné d'un angle compris entre 90^{•} et 170^{•} par rapport au diamètre du galet passant par la zone de contact avec la roue.

Selon une variante spécifique, ledit galet est monté coaxialement sur l'arbre du moteur.

Selon encore une autre caractéristique, la zone d'entraînement du galet vient en appui rotatif contre la roue arrière sous l'action du poids de l'ensemble propulseur et/ou d'un vérin.

Le dispositif de l'invention est simple, compact et amovible et s'adapte à la plupart des cycles existant sur le marché tout en offrant un grand confort d'utilisation.

En effet, le débrayage du moteur est automatique du fait que le montage flottant permet au galet de s'écarter naturellement de la roue lorsque celle-ci tourne plus vite que le moteur et/ou que le galet ; l'organe de rappel élastique favorisant alors le pivotement de l'ensemble propulseur ou du seul bloc moteur vers le haut.

Cette disposition évite les nombreuses opérations manuelles de débrayage et d'embrayage.

Au surplus, la disposition particulièrement originale du bloc moteur de l'invention assure en position embrayée un arc-boutement du galet contre la roue, ce qui réduit considérablement les glissements et améliore le rendement du dispositif.

Cet arc-boutement est éventuellement renforcé par l'action d'un vérin monté entre la batterie et le moteur.

Enfin, le dispositif de l'invention respecte parfaitement les normes en vigueur, en particulier, vis-à-vis du gabarit limite imposé au bloc moteur.

L'invention sera mieux comprise à la lecture de la description qui va suivre en référence aux dessins sur lesquels :
- la figure 1 représente une vue de profil schématique d'un mode de mise en oeuvre du dispositif de l'invention sur une bicyclette traditionnelle ;
- les figures 2A et 2B représentent respectivement une vue de profil et une vue en coupe partielle d'une variante de réalisation des moyens de fixation du dispositif de l'invention ;
- la figure 3 représente une vue en perspective d'une autre variante de réalisation des moyens de fixation du dispositif de l'invention ;
- les figure 4A, 4B et 4C représentent respectivement une vue de dessus, une vue de profil droit et une vue de profil gauche d'une variante de réalisation des moyens de transmission du dispositif de l'invention.

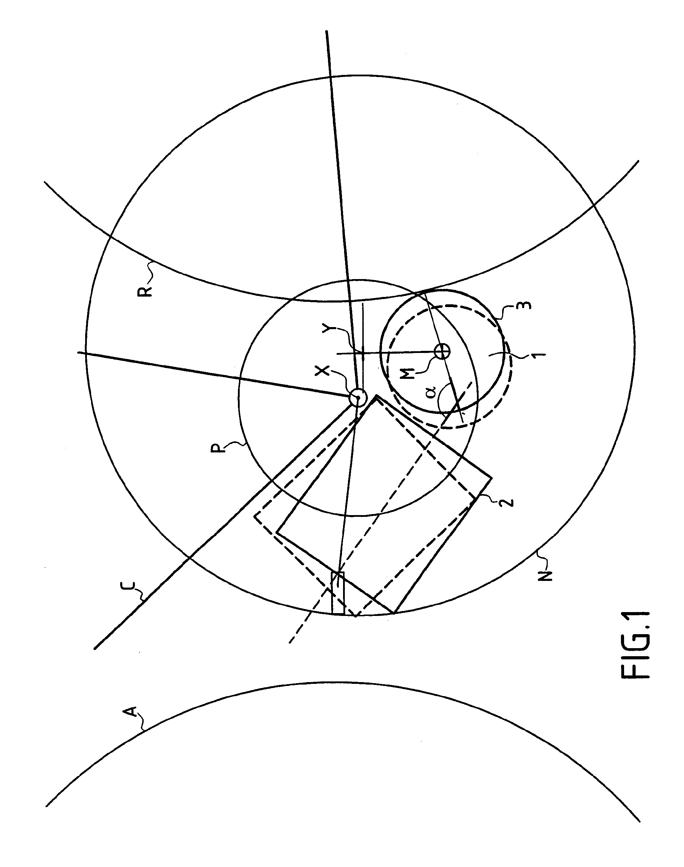

La figure 1 représente le dispositif de motorisation de l'invention équipant une bicyclette traditionnelle (partiellement représentée) constituée notamment d'un cadre C, d'un pédalier P, d'une roue avant A et d'une roue arrière R.

Le dispositif de l'invention comprend un ensemble propulseur constitué d'un bloc moteur électrique 1 traditionnel du type moteur de ventilateur, assurant un régime normal de rotation compris entre 2500 et 4000 tours/mn et d'une batterie 2.

Le moteur est alimenté par une batterie 2 telle qu'une batterie au plomb de 12 volts et 10 A. heure, implantée sous le cadre C devant le moteur 1.

La connexion électrique entre le moteur 1 et la batterie 2 est assurée de manière classique.
La batterie 2 est reliée au moteur 1 par des organes de liaison mécanique traditionnels (rigides ou mobiles) sans qu'un assemblage rectiligne ou qu'un alignement ne soit nécessaire.

Le dispositif de motorisation comporte, en outre, des moyens de fixation de l'ensemble moteur 1 et batterie 2 au cadre C ainsi que des moyens de transmission agissant, en phase d'assistance au pédalage, entre l'arbre du moteur 1 et la roue arrière R.

Le bloc moteur peut prendre deux positions, respectivement, une position haute de débrayage et une position basse d'embrayage correspondant à l'assistance.

Dans toutes les positions, l'ensemble propulseur s'inscrit dans un volume d'encombrement maximum qui respecte les normes en vigueur et qui est représenté en deux dimensions sur la figure 1 par un cercle N, de façon à ne pas gêner la manoeuvre de la roue avant A.

Compte tenu de la longueur standard de 175 mm d'une manivelle de pédale, l'invention permet l'installation d'une batterie de 150 x 120 mm dans le secteur N autorisé y compris l'espace nécessaire à la cinématique de débrayage du moteur 1.

Les fonctions d'antivol, de mise en marche et d'arrêt du moteur 1, de régulation de sa puissance sont assurées par des moyens électroniques classiques.

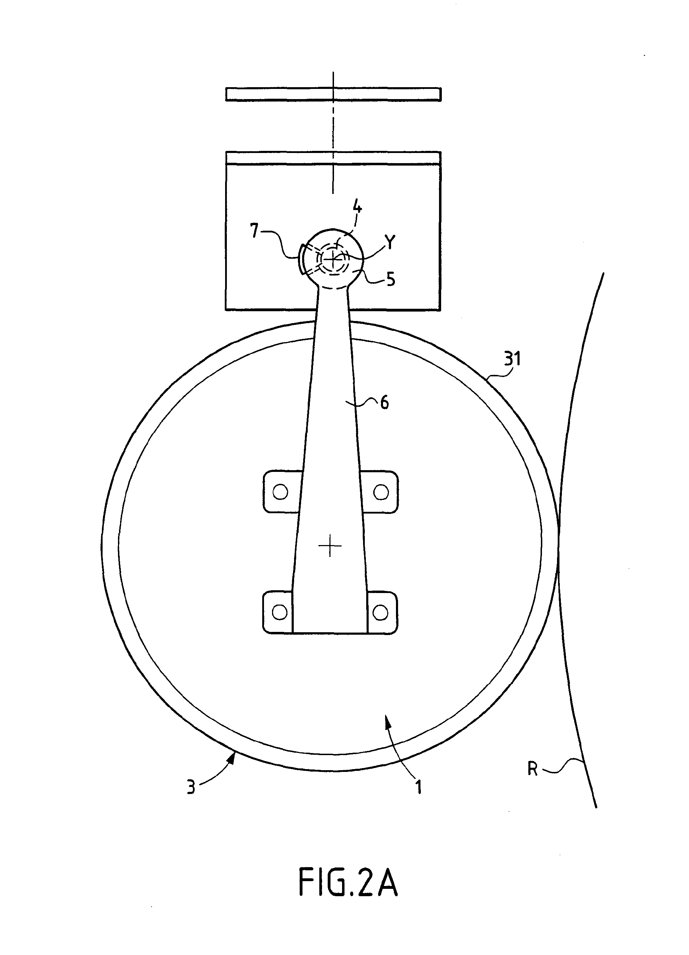

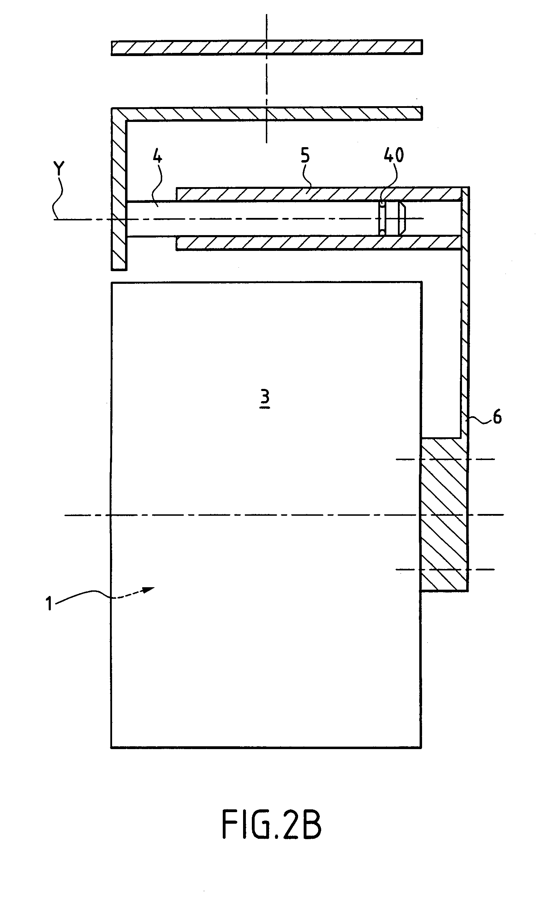

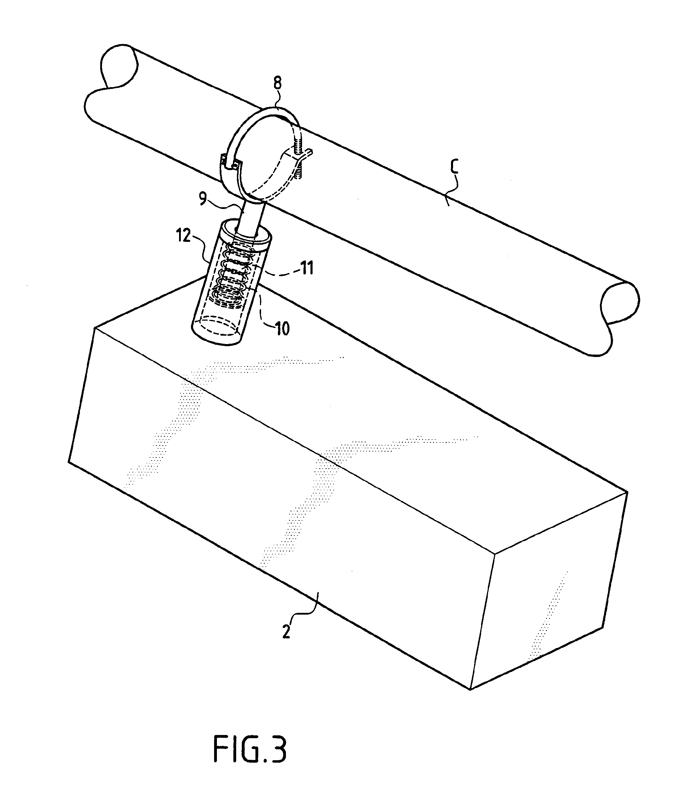

Selon l'invention et dans le mode de réalisation des figures 2A, 2B et 3 où la batterie 2 est solidaire du bloc moteur 1, les moyens de fixation assurent une liaison rotative de l'ensemble propulseur 1,2 autour d'un axe Y parallèle à l'axe X du pédalier, situé légèrement en dessous de ce dernier (environ 2cm) et sensiblement à mi-distance entre l'axe X et la roue arrière R.

Cette liaison rotative permet d'utiliser le poids de la batterie dans une cinématique pendulaire pour optimiser le mode d'entraînement de la roue arrière R par le moteur 1.
Les moyens de transmission de l'énergie mécanique produite par le moteur 1 à la roue arrière R utilisent le contact de friction entre un organe mécanique intermédiaire relié mécaniquement à l'arbre moteur M et la bande de roulement du pneu équipant cette roue.

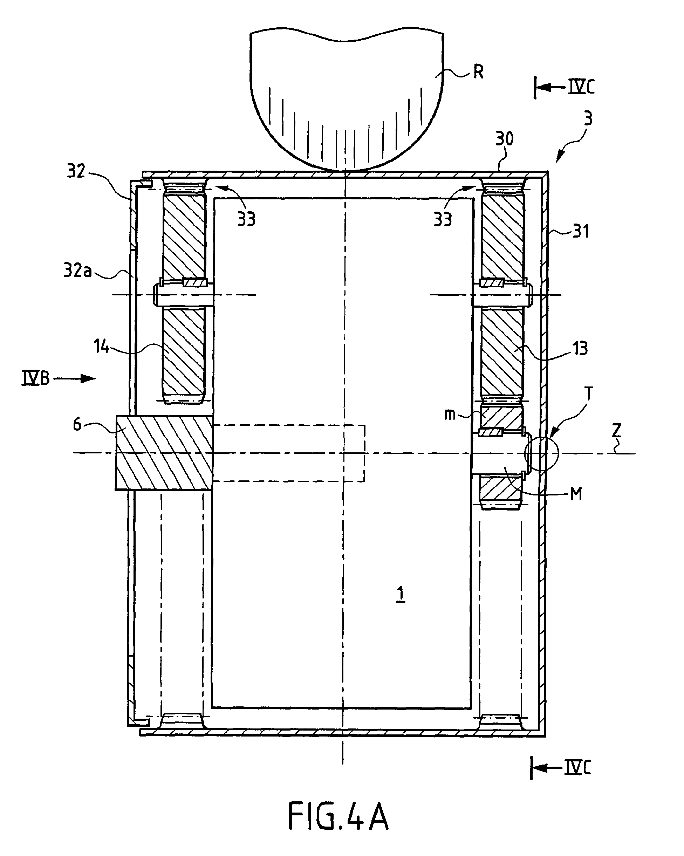

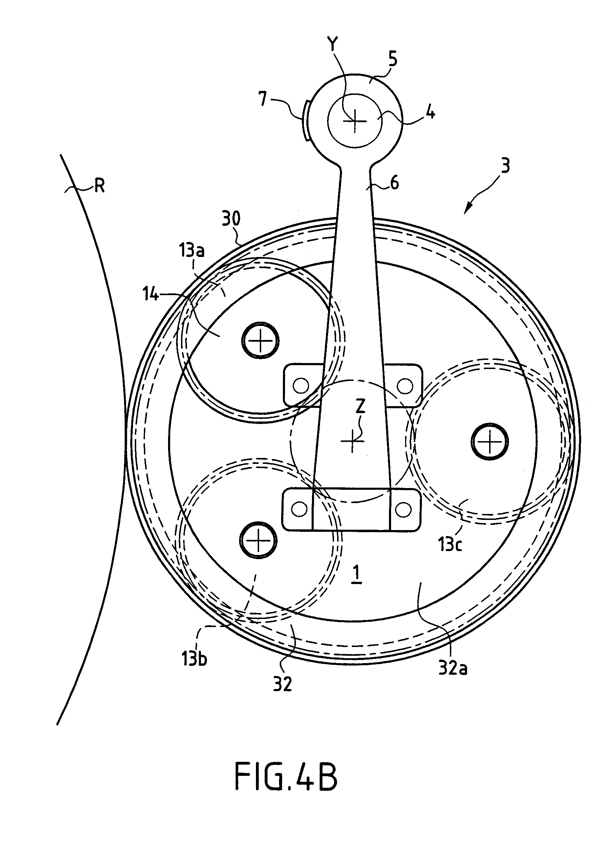

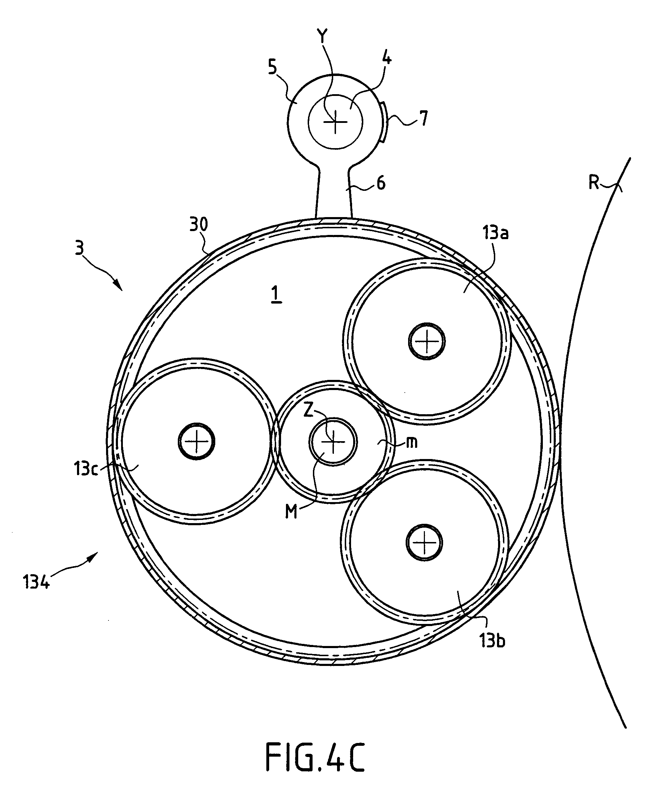

Ces moyens de transmission qui sont représentés en détail sur les figures 4A, 4B et 4C comprennent un galet cylindrique 3 pourvu d'une zone périphérique externe 31 d'entraînement par friction. Ce galet est raccordé à l'arbre M du moteur et, dans le mode de réalisation représenté, le galet est monté coaxialement sur l'arbre dudit moteur.

Selon une autre variante non représentée, le galet est monté parallèlement et en prise indirecte avec l'arbre du moteur.

De manière générale, pour transmettre une puissance de 200 watts à 20 km/h à une roue de diamètre 0,7m, il faut produire un effort tangentiel d'environ 36N, et un effort d'appui (radial) de cinq à dix fois plus important, soit de 180 à 360 N. La distance entre le point ou la zone de contact galet/roue et l'axe de rotation Y de la fixation est d'environ 0,08 m. Le couple est donc de l'ordre de + 0,08 x 36 Nm (effort radial) et - 0,08 x 36 Nm (effort tangentiel), le poids de la batterie offrant + 0,13 x 40 Nm. Un organe de rappel, placé entre le cadre C et la batterie 2 (voir figure 3) vient ajouter le complément, soit environ 8Nm pour une force de 40N et un bras de levier de 0,2m. On constate donc que l'effort sur le cadre C est faible. En effet, une partie de l'effort d'appui sur la roue R est assurée par le poids de la batterie 2 et l'effort de levier par rapport à l'axe de rotation Y.

Selon une variante représentée, il est possible de prévoir un vérin et/ou un ressort intermédiaire entre le cadre C et l'ensemble propulseur moteur 1/batterie 2 ou entre la batterie 2 (qui est alors immobilisée par rapport au cadre) et le bloc moteur protégé par un carter.

L'invention permet d'envisager un mode de fixation léger du moteur 1 au cadre C qui ne reprend aucun couple, mais seulement un effort d'environ 250N.

Toutefois, l'axe longitudinal de la batterie 2 doit être incliné d'un angle α compris entre 90^{•} et 150^{•} par rapport au diamètre du galet 3 passant par la zone de contact avec la roue R.

Dans ces conditions, le moteur 1 et le galet 3 s'écartent automatiquement de la roue R lorsque la vitesse de cette dernière devient supérieure à la vitesse du galet.

Les moyens de fixation représentés sur les figures 2A et 2B comprennent un pivot cylindrique 4 monté sous le cadre C parallèlement à l'axe X du pédalier P (non représenté sur ces figures). Le pivot 5 peut être, par exemple, un axe métallique de 10 mm de diamètre et 30 mm de longueur fixé sur le cadre C à la manière d'un axe de béquille.

Le pivot 4 est destiné à coopérer en libre rotation et de manière amovible avec un manchon 5 porté par l'extrémité supérieure d'un bras de suspension 6 solidaire du bloc moteur à la manière d'un pendule.

Une variante représentée sur les figures 2A et 2B prévoit de bloquer en translation le manchon 4 sur le pivot 5.

A cet effet, le pivot 4 comporte à son extrémité libre une rainure périphérique 40 dans laquelle est engagée l'extrémité interne d'une languette 7 de verrouillage de section tronconique, logée dans une gorge de profil complémentaire ménagée sur la paroi du manchon 4.

Ces moyens de fixation spécifiques permettent à la zone d'entraînement 31 du galet 3 de venir, dans la position basse du bloc moteur, en appui rotatif contre la roue arrière R soit sous la seule action du poids de l'ensemble propulseur et surtout de celui de la batterie 2, soit sous l'action d'un vérin intermédiaire (non représenté), la batterie étant alors rendue solidaire du cadre C.

De préférence, le moteur 1 est logé, au moins partiellement à l'intérieur du galet 3 formant carter et le bras de suspension 6 est directement porté par le moteur 1 en s'étendant perpendiculairement à l'arbre du moteur M.

Les moyens de fixation comprennent, en outre, un organe de rappel élastique du bloc moteur en position haute de débrayage.

Cet organe de rappel est constitué, selon une variante de réalisation représentée sur la figure 3, d'un collier 8 en serrage sur le cadre C et se prolongeant vers le bas par une tige 9 reliée à la batterie 2 via un ressort hélicoïdal 10 et/ou un vérin 11.

Le ressort 10 et /ou le vérin 11 sont enfermés dans un élément tubulaire 12 assurant aussi le guidage de la tige 9 lors du pivotement du bloc moteur entre les positions de débrayage et d'embrayage.

Dans le mode de réalisation des figures 4A, 4B et 4C, le galet 3 est constitué d'un cylindre évidé 30 pourvu de deux flasques latéraux 31,32 formant des capots de protection comme représenté sur la figure 4A. Le flasque 32 qui est de préférence amovible, comporte une ouverture centrale 32a pour le passage du bras de suspension 6 solidaire du stator du moteur 1.

Cette ouverture 32a assure également l'aération du moteur 1 et la rigidification de la liaison mécanique du galet 3 et du moteur.

Le cas échéant, des roulements T sont prévus entre l'extrémité en saillie de l'arbre moteur M et la paroi interne du flasque latéral 31.

Le galet 3 est monté ici coaxialement sur l'arbre moteur M, au moyen d'engrenages internes 13 de démultiplication qui sont en prise, d'une part, avec une roue dentée centrale m portée par l'arbre M et, d'autre part, avec une zone circonférentielle crénelée 33 ménagée sur la paroi latérale interne du galet 3 et formant une piste d'entraînement et de guidage.

De préférence, les engrenages 13 sont constitués d'un jeu d'au moins deux et ici de trois roues dentées 13a,13b,13c identiques et/ou coplanaires montées rotatives sur des axes parallèles à l'axe commun Z du galet 3 et de l'arbre M.

Les roues 13a, 13b, 13c sont décalées angulairement de façon à ce que l'une d'entre elles travaille intérieurement sur la paroi du galet 3 au niveau de la zone de contact avec la roue R (voir figure 4C).

Au moins, l'une des roues (sur les figures 4B et 4C toutes les roues) est jumelée avec une roue symétrique 14, montée du côté opposé par rapport au moteur 1 et sur le même axe ou sur un axe aligné (voir figure 4A).

Ainsi, les efforts d'appui du galet 3 sur le pneu de la roue R sont repris de part et d'autre du moteur 1 et un centrage parfait n'est pas nécessaire. Une déformation du galet 3 de l'ordre du millimètre est même tolérée.

Dans ces conditions, le palier central (non représenté) du moteur 1 ne supporte aucun effort radial, ce qui respecte les conditions normales d'utilisation de ce type de moteur.

## Revendications

1. Dispositif pour la motorisation d'une bicyclette du type comprenant un ensemble propulseur constitué d'un moteur électrique (1) et d'une batterie (2), des moyens de transmission agissant entre l'arbre (M) du moteur et la roue arrière (R), comprenant un galet cylindrique (3) raccordé à l'arbre (M) du moteur et pourvu d'une zone périphérique d'entraînement par friction et des moyens de fixation dudit ensemble propulseur (1,2) au cadre (C) de la bicyclette comprenant un pivot cylindrique (4) monté sous le cadre (C) parallèlement à l'axe du pédalier (P) et destiné à coopérer avec un manchon (5) porté par un bras de suspension (6) solidaire dudit ensemble propulseur (1,2), caractérisé en ce que l'ensemble propulseur est amovible et en ce que le moteur (1) est logé au moins partiellement à l'intérieur dudit galet (3) formant carter qui est raccordé à l'arbre moteur (M) au moyen d'engrenages internes (13) de telle sorte que la zone d'entraînement du galet (3) vienne en appui rotatif contre la roue arrière (R) sous l'action du poids dudit ensemble propulseur (1,2) et/ou d'un vérin dans une cinématique pendulaire.

2. Dispositif selon la revendication 1, caractérisé en ce que lesdits moyens de fixation comprennent, en outre, un organe de rappel élastique d'au moins une partie dudit ensemble propulseur (1,2) en position haute de débrayage.

3. Dispositif selon la revendication 2, caractérisé en ce que ledit organe de rappel est constitué d'un collier (8) en serrage sur le cadre (C) et se prolongeant vers le bas par une tige (9) reliée à la batterie (2) via un ressort hélicoïdal (10) et/ou un vérin (11).

4. Dispositif selon l'une des revendications précédentes,
caractérisé en ce que ledit galet (3) est constitué d'un cylindre évidé (30) pourvu de deux flasques latéraux (31, 32)

5. Dispositif selon l'une des revendications précédentes,
caractérisé en ce que ledit bras de suspension (6) est porté par le moteur (1) perpendiculairement à son arbre (M).

6. Dispositif selon l'une des revendications précédentes,
caractérisé en ce que lesdits engrenages (13) sont en prise, d'une part, avec une roue dentée centrale (m) portée par l'arbre moteur (M) et, d'autre part, avec une zone circonférentielle crénelée (33) ménagée sur la paroi latérale interne dudit galet (3).

7. Dispositif selon l'une des revendications précédentes,
caractérisé en ce que lesdits engrenages (13) sont constitués d'un jeu d'au moins deux roues dentées (13a,13b,13c) identiques et/ou coplanaires dont les axes sont parallèles à l'axe (7) du galet (3).

8. Dispositif selon l'une des revendications précédentes,
caractérisé en ce qu'au moins, l'un desdits engrenages (13) est jumelé avec une roue (14) montée sur le même axe et symétriquement par rapport au moteur (1).

9. Dispositif selon l'une des revendications précédentes,
caractérisé en ce que ledit pivot (4) comporte un organe (7) de blocage en translation dudit manchon (5).

10. Dispositif selon l'une des revendications précédentes,
caractérisé en ce que l'axe longitudinal de la batterie (2) est incliné d'un angle (α) compris entre 90^{•} et 170^{•} par rapport au diamètre du galet (3) passant par la zone de contact avec la roue (R).

11. Dispositif selon l'une des revendications précédentes,
caractérisé en ce que ledit galet (3) est monté coaxialement sur l'arbre (M) du moteur (1).
